# EUROPEAN PATENT APPLICATION

(11) **EP 2 023 561 A1**
(43) Date of publication of application: **11.02.2009**
(21) Application number: 08161622.9
(22) Date of filing: 01.08.2008
(51) Int. Cl.: H04L 27/26, H04L 5/02

(54) **Wireless base station, mobile station, wireless communication system, and wireless communication method**

(30) Priority: 03.08.2007 JP 2007203463; 05.06.2008 JP 2008148413
(71) Applicant: NTT DoCoMo, Inc., Chiyoda-ku Tokyo 100-6150 (JP)
(72) Inventor: Takahashi, Hideaki, Tokyo 100-6150 (JP); Maeda, Noriyuki, Tokyo 100-6150 (JP); Miura, Shunji, Tokyo 100-6150 (JP); Asakura, Hiromitsu, Tokyo 100-6150 (JP)
(74) Representative: Rupp, Christian

(57) **Abstract**

The wireless base station (10) includes a multiplexing unit (13) generating user data; a channel assignment control unit (14) for selecting subcarrier groups from a plurality of subcarriers on two carriers, forming two wireless frames including subchannels generated from the subcarrier groups, and for time-division multiplexing and setting the user data and control data to the two wireless frames; and a transmitting and receiving unit (16) transmitting a wireless signal including the wireless frames, wherein the channel assignment control unit (14) divides all of the subchannels in the two wireless frames into areas of destination sectors, stores the control data only in the corresponding area, and stores the user data in all of the areas in the two wireless frames.

## Description

### BACKGROUND OF THE INVENTION

### Field of the Invention

The present invention relates to a wireless base station, a mobile station, a wireless communication system, and a wireless communication method.

### Related Background Art

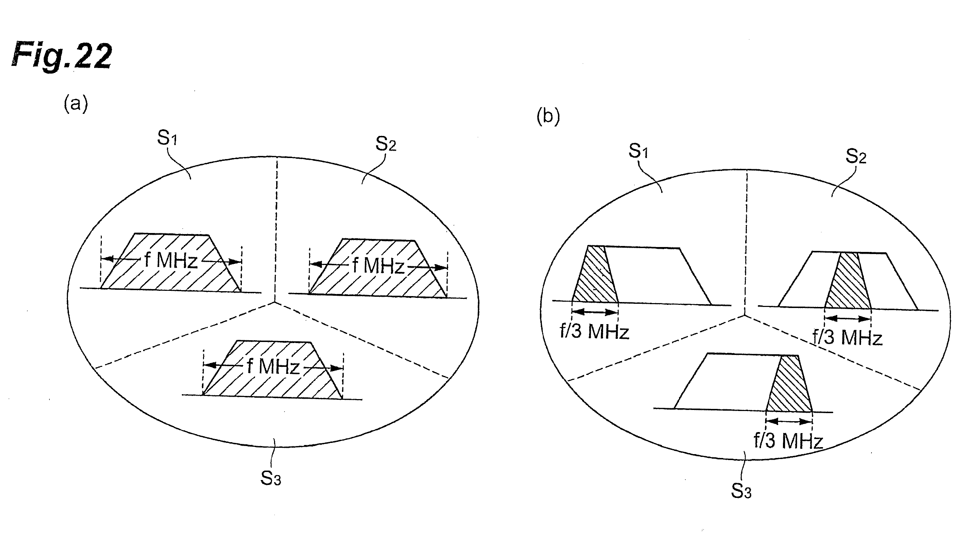

There are known mobile communication systems using orthogonal frequency division multiple access (OFDMA) that enables multiple connections between a wireless base station and mobile stations by dividing a carrier signal into a plurality of orthogonal subcarriers. Details of such a communication method are described in Non-patent Document 1, listed below. Two channel assigning methods for a mobile communication system using OFDMA are known, as are illustrated in Figs. 22A and 22B. In the method shown in Fig. 22A, subcarriers of the same frequency band are assigned to respective sectors S₁, S₂, and S₃ of one wireless base station. In the method shown in Fig. 22B, a frequency band is logically divided into three segments, and subcarriers belong to the divided segments are assigned to the adjoining sectors S₁, S₂, and S₃, respectively.

A channel assignment system is also disclosed (refer to Patent Document 1 and Fig. 23). The system divides a cell C₁, which corresponds to a wireless base station, into an outer region A₁ and an inner region A₂, assigns all transferable subcarriers to the inner region A₂, which has less interference with other cells, and assigns part of the subcarriers, which are acquired by diving to segments, to the outer region A₁, which has a larger interference with other cells.

Patent Document 1: Japanese Unexamined Patent Application Publication No. 2005-80286

Non-patent Document 1: "IEEE Standard for Local and metropolitan area networks Part 16: Air Interface for Fixed and Mobile Broadband Wireless Access Systems Amendment 2: Physical and Medium Access Control Layers for Combined Fixed and Mobile Operation in Licensed Bands and Corrigendum 1", IEEE Std, February 2006

### SUMMARY OF THE INVENTION

Among the methods described above, the method of assigning subcarriers of the same frequency band to each sector improves throughput since all transmittable bandwidths are used. However, there is a tendency of reduction in communication quality at the cell borders because interference is great between adjoining cells. On the other hand, the method of segmenting a frequency band is advantageous in that interference is small between adjoining cells, but throughput tends to decrease. In particular, when OFDMA compliant to IEEE802.16e is used, the data length of DL-MAP and UL-MAP, which are control signals in the wireless frames, increases proportional to the number of users of mobile stations. Therefore, the problem of a decrease in throughput becomes significant as the number of users increase.

The assignment method according to Patent Document 1 prevents a decrease in throughput by assigning all frequency bands in the inner area. However, since each user data section in a wireless frames has to be time-divided into an outer area and an inner area of a cell, throughput does not improve significantly.

In such a mobile communication system using OFDMA, subcarriers belonging to a plurality of carriers may be assigned. In such a case, subcarriers assigned to three segments in each of the carriers. Therefore, when, for example, two carriers are used, subcarriers in six segments are spatially repeated and assigned to six sectors of adjoining sectors. Interference between adjoining sectors can be reduced by increasing the number of carriers in this way. However, throughput of user data still decreases as the number of users increase.

The present invention has been conceived in light of the above-described problems. It is an object of the present invention to provide a wireless base station, a mobile station, a wireless communication system, and a wireless communication method that reduce inter-cell interference and increase maximum throughput in order to improve the use efficiency of a frequency space.

To solve the above-mentioned problems, the present invention provides a wireless base station that transmits and receives wireless signals by orthogonal frequency division multiple access between a plurality of mobile stations, including multiplexing means generating multiplexed user data; channel-assignment controlling means generating a plurality of subchannels, each including a bundle of subcarriers distributed on a first carrier, generating a plurality of subchannels, each including a bundle of subcarriers distributed on a second carrier different from the first carrier, forming a first wireless frame including the subchannels generated on the first carrier, forming a second wireless frame including the subchannels generated on the second carrier, and multiplexing and assigning the user data and control data, on the assignment of the user data in the first and second wireless frames, in the first and second wireless frames; and transmitting means transmitting a wireless signal including the first and second frames, wherein the channel-assignment controlling means assigns all of the subchannels in the first and second wireless frames to areas of destination sectors of the wireless signal, stores the control data in only the area corresponding to the destination sector of the user data, and stores the user data in all of the areas in the first and second wireless frames.

With such a wireless base station, a plurality of subcarrier groups are selected on at least two carriers, two wireless frames including subchannels generated from the subcarrier groups are constructed, user data and control data, on the assignment of the user data in the two wireless frames, are set to the two wireless frames, and a wireless signal including the two wireless frames are transmitted to the mobile station. At this time, the subchannels in the two wireless frames are divided into areas of destination sectors; the control data is stored in an area corresponding the respective destination sector; and the user data is stored in all of the subchannels in the two wireless frames. Therefore, deficiency of control data caused by interference between cells can be prevented at the mobile station and a reception quality of the user data can be secured and, at the same time, throughput of the user data during transmission can be efficiently improved by receiving the user data by effectively using the bandwidth of the two wireless frames.

It is preferable that the channel-assignment controlling means set first storage information for specifying the area of the storage destination of the control data to the first or second wireless frame and set second storage information for indicating a storage start position of the user data in the first or second wireless frame and storage type information for indicating whether or not the user data is stored in the first and second wireless frames to the control data. By including such channel-assignment controlling means, the wireless base station can notify the mobile station about the storage destination of the control data in the divided area of the two wireless frames by the first storage information and can notify the mobile station about the storage start position of user data and the storage destination wireless frame by the second storage information and the storage type information. In this way, the control data and the user data can be reliably retrieved by the mobile station from the range of the subchannels in two wireless frames.

It is preferable that the channel-assignment controlling means set first storage information for specifying the area of the storage destination of the control data to the first or second wireless frame and set second storage information for indicating a storage start position of the user data in the first or second wireless frame and carrier identification information for identifying a carrier corresponding to the wireless frame of the storage destination of the user data to the control data. By including such channel-assignment controlling means, when different wireless frames area assigned to three or more frequency bands area or when different frequency bandwidths area assigned to the uplink and downlink directions in time-division duplex and frequency-division duplex, the control data and the user data can be reliably retrieved by the mobile station from the wireless frames.

It is preferable that the channel-assignment controlling means store the control data in a specific time domain in the area corresponding to the destination sector and store the user data the specific time domain in one of the first and second wireless frames, whichever does not include the area corresponding to the destination sector. In this case, wireless resources can be efficiently used by transmitting user data using vacant areas in the wireless frames.

It is preferable that the channel-assignment controlling means specify the user data addressed to one of the mobile stations which satisfies a predetermined communication quality on the basis of communication quality information in a downlink direction of the mobile stations and store the specified user data in the specified time domain in the wireless frame that does not include an area corresponding to the destination sector. By including such channel-assignment controlling means, the reception quality of the user data can be maintained while efficiently using wireless resource by transmitting the user data in a vacant area in the wireless frames to a destination that is less likely to experience interference between carriers.

It is preferable that, when the user data is stored in the specific time domain in the wireless frame that does not include an area corresponding to the destination sector, transmission power of the user data be set lower than transmission power of user data stored in a time domain other than the specific time domain within a range satisfying a predetermined communication quality. In this way, interference between carriers when receiving the control signal is reduced, and the control data can be retrieved from the wireless frames more reliably by the mobile station.

It is preferable that the channel-assignment controlling means further distribute and store the control data in one of the first and second wireless frames, whichever does not include an area corresponding to the destination sector. By including such channel-assignment controlling means, the control data can be distributed in a frequency band. Therefore, even when traffic of user data increases, the user data can be efficiently transmitted.

It is preferable that the wireless base station further include receiving means receiving a wireless signal including the first and second frames; and channel-assignment analyzing means separating user data from the wireless signal, wherein the channel-assignment analyzing means separates the user data from all of the areas in the first and second frames. According to such a configuration, throughput during transmission of the user data can be efficiently improved by transmitting the user data by efficiently using the bandwidths of the two wireless frames, even when the user data is received from the mobile station.

The present invention includes provides a mobile station that transmits and receives a wireless signal by orthogonal frequency division multiple access between a plurality of mobile stations, the mobile station including receiving means receiving a wireless signal from the wireless base station, the wireless signal including a first wireless frame comprising subchannels, each including a bundle of subcarriers distributed on a first carrier and a second wireless frame comprising subchannels, each including a bundle of subcarriers distributed on a second carrier; and channel-assignment analyzing means separating control data, on the assignment of user data in a first wireless frame and a second wireless frame, and the user data being multiplexed from the first and second wireless frames, wherein the channel-assignment analyzing means divides all of the groups of subchannels in the first and second wireless frames into areas for destination sectors of the wireless base station, separates the control data from only the area corresponding to the mobile station in the first or the second wireless frame, and separates the user data from all of the areas in the first and the second wireless frames.

With the mobile station having such a configuration, a wireless signal is received from the wireless base station. The received signal includes two wireless frames having subchannels, each including a bundle of subcarriers, on two carriers. The user data and the control data, on the assignment of user data in a first wireless frame, are set to the wireless frames. Then, since the control data is separated from only the area corresponding to the mobile station in all of the subchannels in the received wireless frames and the user data is separated from all of the subchannels in the two wireless frames, deficiency of the control data caused by interference between cells can be prevented at the mobile station and a reception quality of the user data can be secured. At the same time, throughput of the user data during transmission can be efficiently improved by receiving the user data by effectively using the bandwidth of the two wireless frames.

A wireless communication system according to the present invention includes the above-described wireless base station and the above-described mobile station.

The present invention provides a wireless communication method of transmitting and receiving a wireless signal by orthogonal frequency division multiple access between a wireless base station and a mobile station, the method including a multiplexing step of generating multiplexed user data at the wireless base station; a channel-assignment controlling step, at the wireless base station, of generating a plurality of subchannels, each including a bundle of subcarriers distributed on a first carrier, generating a plurality of subchannels, each including a bundle of subcarriers distributed on a second carrier different from the first carrier, forming a first wireless frame including the subchannels generated on the first carrier, forming a second wireless frame including the subchannels generated on the second carrier, and multiplexing and assigning the user data and control data, on the assignment of the user data in the first and second wireless frames, in the first and second wireless frames; and transmitting step of transmitting a wireless signal including the first and second frames from the wireless base station; a receiving step of receiving the wireless signal from the wireless base station at the mobile station; and a channel-assignment analyzing step, at the mobile station, of retrieving control data, on the assignment of user data in a first and a second wireless frames, and the user data being multiplexed from the first and second wireless frames, wherein, in the channel-assignment controlling step, all of the subchannels in the first and second wireless frames are assigned to areas of destination sectors of the wireless signal, the control data is stored in only the area corresponding to the destination sector of the user data, and the user data is stored in all of the areas in the first and second wireless frames, and wherein, in the channel-assignment analyzing step, the control data is separated from only the area corresponding to the mobile station in the first and second wireless frames and separates the user data from all of the areas in the first and second wireless frames.

According to such a wireless communication system and a wireless communication method, two wireless frames, each including subchannels generated from a plurality of subcarriers, are formed on at least two carriers, the user data and the control data, on the assignment of user data in a first wireless frame, are set to the two wireless frames, and a wireless signal including the two wireless frames are transmitted to the mobile station. At this time, the subchannels in the two wireless frames are divided into areas of the destination sectors; the control data is stored in an area of the corresponding destination sector; and the user data is stored in all of the subchannels in the two wireless frames. Then, the wireless signal is received at the mobile station form the wireless base station, and the control data is separated from only the area corresponding to the mobile station in all of the subchannels in the received wireless frames and the user data is separated from all of the subchannels in the two wireless frames. Therefore, deficiency of the control data caused by interference between cells can be prevented at the mobile station and a reception quality of the user data can be secured, and at the same time, throughput of the user data during transmission can be efficiently improved by receiving the user data by effectively using the bandwidth of the two wireless frames.

### BRIEF DESCRIPTION OF THE DRAWINGS

Fig. 1 is a schematic view of a wireless base station according to a preferable embodiment of the present invention.
Fig. 2 is a schematic view of a mobile station according to a preferable embodiment of the present invention.
Fig. 3 is a schematic view of a data series on the time axis and the frequency axis of a wireless frame created by the channel assignment control unit, which is shown in Fig. 1.
Fig. 4 illustrates an image after dividing subchannels.
Fig. 5 is a schematic view of the positions of sectors around the wireless base station, which is shown in Fig. 1.
Fig. 6 illustrates a data series in two wireless frames assigned to each destination sector by the channel assignment control unit, which is shown in Fig. 1.
Fig. 7 illustrates a data series in two wireless frames assigned to each destination sector by the channel assignment control unit, which is shown in Fig. 1.
Fig. 8 illustrates an example data configuration of DL-MAP assigned by the channel assignment control unit, which is shown in Fig. 1.
Fig. 9 illustrates storage areas of user data assigned to the two wireless frames by the channel assignment control unit, which is shown in Fig. 1.
Fig. 10 illustrates an example data configuration of UL-MAP assigned by the channel assignment control unit, which is shown in Fig. 1.
Fig. 11 illustrates an example data configuration of UCD and DCD assigned by the channel assignment control unit, which is shown in Fig. 1.
Fig. 12 is a sequence diagram illustrating the operation of transmitting downlink user data from a wireless base station to a mobile station.
Fig. 13 is a sequence diagram illustrating the operation of transmitting uplink user data from a mobile station to a wireless base station.
Fig. 14 illustrates a data configuration of UCD and DCD, which is transmitted by the channel assignment control unit according to a modification of an embodiment.
Fig. 15 illustrates a data configuration of DL-MAP, which is assigned by the channel assignment control unit according to a modification of an embodiment.
Fig. 16 illustrates a data configuration of DL-MAP, which is assigned by a channel assignment control unit according to another modification of an embodiment.
Fig. 17 is a graph illustrating the distribution of transmission carriers according to another modification of an embodiment.
Fig. 18 illustrates a data series of two wireless frames assigned to each transmission sector by a channel assignment control unit according to another modification of an embodiment.
Fig. 19 illustrates a data configuration of UCD and DCD, which is transmitted by a channel assignment control unit according to another modification of an embodiment.
Fig. 20 illustrates a data configuration of wireless frames assigned by a channel assignment control unit according to another modification of an embodiment.
Fig. 21 illustrates a data configuration of DL-MAP, which is assigned by a channel assignment control unit according to another modification of an embodiment.
Fig. 22 illustrates frequency bandwidths of carriers of each sectors in a known wireless communication system.

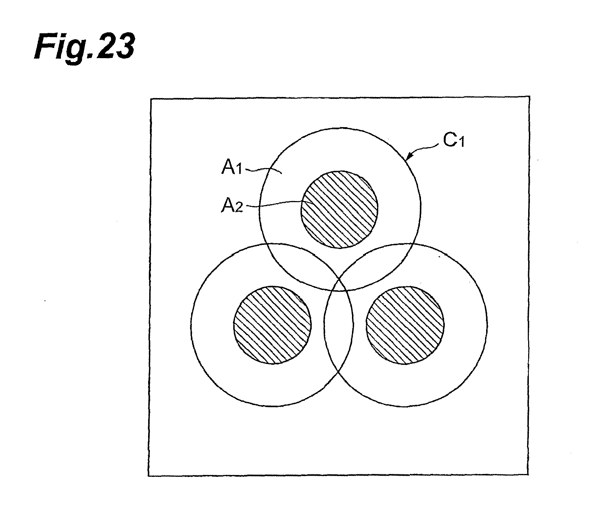

Fig. 23 illustrates a cell configuration of a known wireless communication system.

### DESCRIPTION OF THE PREFERRED EMBODIMENTS

A wireless communication system and a wireless communication method according to preferable embodiments of the present invention will be described in detail below with reference to the drawings. In descriptions referring to the drawings, the same components are represented by the same reference numerals, and descriptions thereof will not be repeated.

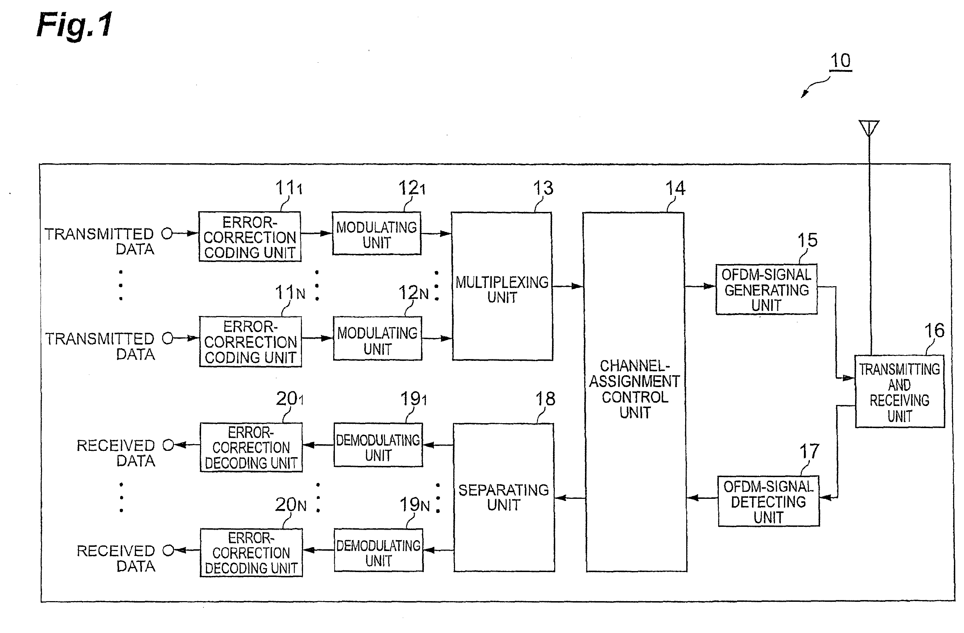

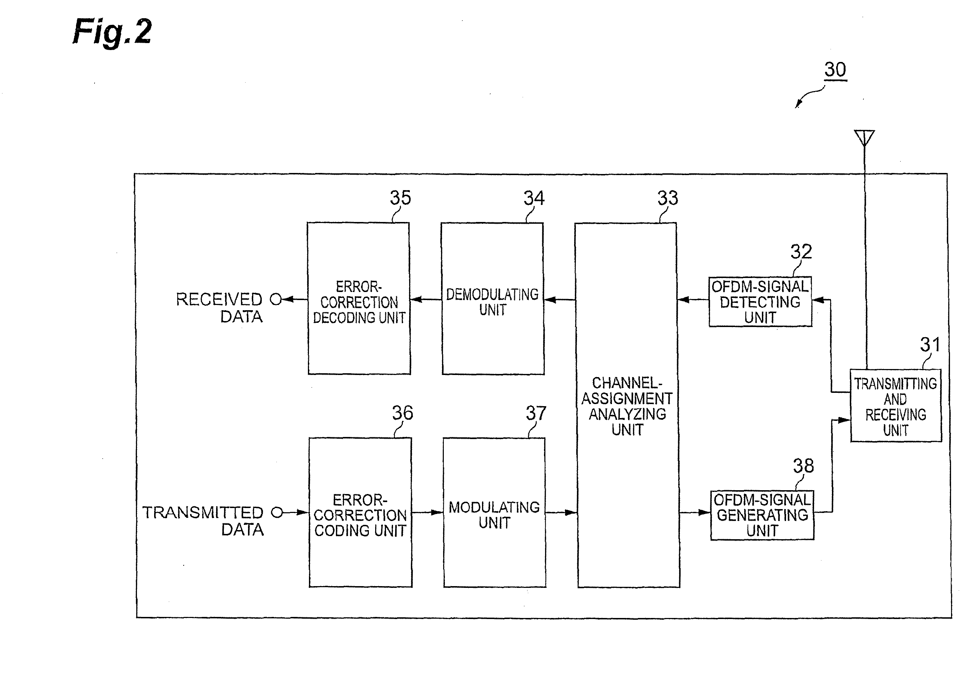

Figs. 1 and 2 are schematic views illustrating, in outline, a wireless base station 10 and a mobile station 30, respectively, according to a preferable embodiment of the present invention. A wireless communication system according to this embodiment includes a plurality of wireless base stations 10 and a plurality of mobile stations 30 and transmits and receives wireless signals between the wireless base stations 10 and the mobile stations 30 using orthogonal frequency division multiple access (OFDMA) compliant to IEEE802.16e. OFDMA is a method of multicarrier transmission in which the entire bandwidth of a transmitted carrier is divided into subcarriers on a frequency axis, and a wireless signal is transmitted in a plurality of bundles of subcarriers in a narrow bandwidth. The bandwidth of the transmitter carrier may be 5 MHz, 10 MHz, or 20 MHz. For the wireless communication system according to this embodiment, two different carriers (for example, a carrier having center frequency of 2.550 MHz and a bandwidth of 10 MHz and a carrier having a center frequency of 2.560 MHz and a bandwidth of 10 MHz) are permitted as the frequency bandwidth of the wireless signals to be transmitted and received.

First, the functional structure of the wireless base station 10 and the mobile station 30 will be described.

As shown in Fig. 1, the wireless base station 10 has error-correction coding units 11₁ to 11_{N}, modulating units 12₁ to 12_{N}, a multiplexing unit (multiplexing means) 13, a channel assignment control unit (channel assignment controlling means, channel assignment analyzing means) 14, an OFDM-signal generating unit 15, a transmitting and receiving unit (transmitting and receiving means) 16, an OFDM-signal detecting unit 17, a separating unit 18, demodulating units 19₁ to 19_{N}, and error-correction decoding units 20₁ to 20_{N}.

Error-correction coding is performed by the error-correction coding units 11₁ to 11_{N} on transmission information (downlink user data) set to be sent to each of a plurality of mobile stations 30. The error-correction coded redundant bit information output from the error-correction coding units 11₁ to 11_{N} is sent to the modulating units 12₁ to 12_{N} and the multiplexing units 13 so as to generate time-division multiplexed user data. The user data output from the multiplexing units 13 is assigned to two wireless frames by the channel-assignment control unit 14 (details will be described below). The wireless frames are converted to an OFDMA wireless signal at the OFDM-signal generating unit 15. Then, the wires signal is transmitted using OFDMA from the transmitting and receiving unit 16 to outside mobile stations 30. Here, the wireless base station 10 is provided in every cell, which is an area where wireless communication with the mobile stations 30 is possible. The wireless base station 10 can send different wireless signals to the three sectors in each cell.

A wireless signal including two wireless frames to which received information (uplink user data) sent from the mobile station 30 to the wireless base station 10 is assigned is received for each sector at the transmitting and receiving unit 16 using OFDMA. The OFDM-signal detecting unit 17 detects the received wireless signal to acquire two wireless frames from the wireless signal. Then, the user data in the two wireless frames are separated into time-division multiplexed data at the channel-assignment control unit 14. Subsequently, the time-division multiplexed data is separated into user data from the mobile station 30 at the separating unit 18. Then, each set of user data is demodulated at the demodulating units 19₁ to 19_{N}, and then, error correction decoding is performed at the error-correction decoding units 20₁ to 20_{N} so as to decode the user data into the received information from the mobile stations 30.

Next, the function of the channel-assignment control unit 14 will be described in detail.

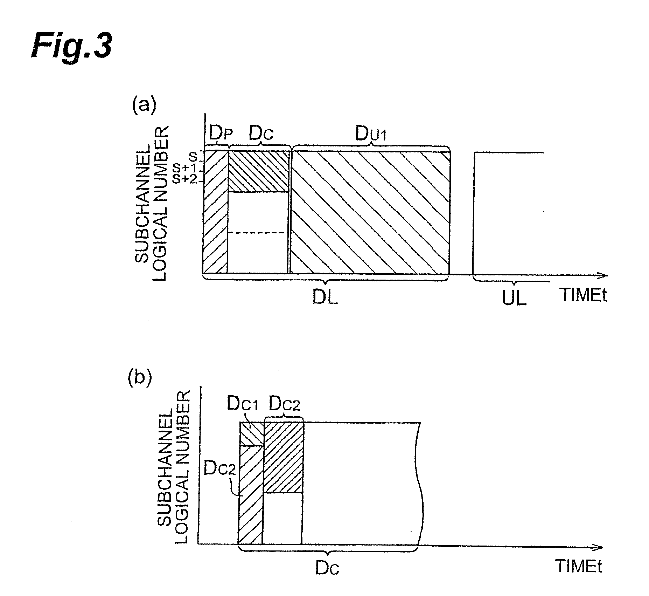

The channel-assignment control unit 14 assigns two wireless frames, which are transmitted and received via two carriers respectively, to respective destination sectors by assigning channels in each wireless frames. Fig. 3A schematically illustrates a data series on a time axis and a frequency axis of one wireless frame assigned by the channel-assignment control unit 14. The channel-assignment control unit 14 assigns a plurality of subchannels for every subchannel logical number S, S+1, S+2..., which are shown in the drawing, on the basis of a predetermined criterion. More specifically, the channel-assignment control unit 14 selects a plurality of subcarrier groups by grouping a plurality of subcarriers distributed on the frequency axis of one of the two carriers in the two frequency bands transmittable by the wireless base station 10. Then, subchannels, which are identified by the subchannel logical numbers, are generated for each subcarrier group, and a wireless frame is generated from the subchannels.

The channel-assignment control unit 14 sets, by multiplexing, data areas for assigning downlink user data, uplink user data, and control information, on the assignment of user data in the two wireless frames, in the two wireless frames. More specifically, the channel-assignment control unit 14 time-divides the wireless frame into a downlink section DL storing data transmitted from the wireless base station 10 to the mobile station 30 and an uplink section UL storing data transmitted from the mobile station 30 to the wireless base station 10 and assigns the data to these sections. The downlink section DL includes, in sequence, a preamble section D_{P} for synchronizing with the wireless frame at the receiver, a control data section D_{C} for controlling the data readout for each sector in the wireless frame, and a user data section D_{U1} for storing user data for the plurality of mobile stations 30. Fig. 3B is a detailed schematic view of a data series on a time axis and a frequency axis of the control data section D_{C} of the wireless frame. As shown in the drawing, the control data section D_{C} includes a frame control header (FCH) D_{c1} for specifying the subchannel to be used for each sector in a wireless frame and mapping information D_{c2}, such as DL-MAP or UL-MAP, indicating the setting area of user data in the subchannel assigned by the FCH.

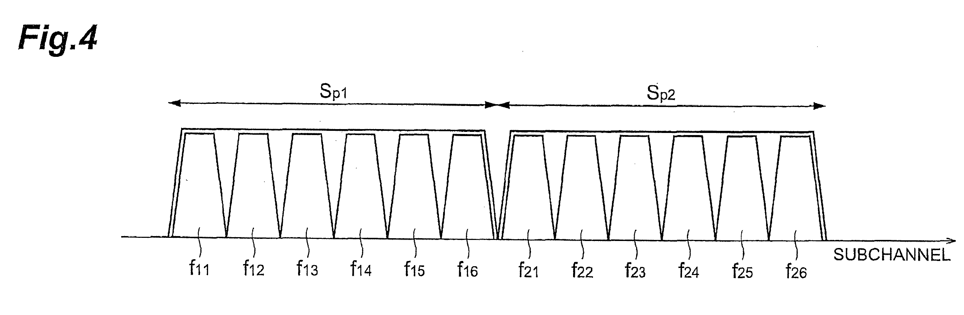

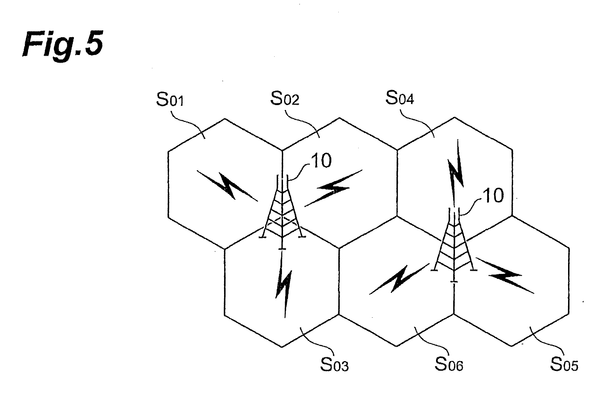

More specifically, when two carriers Sp1 and Sp2, which have difference frequencies, are allowed as carriers for transmitting and receiving a wireless signal, the channel-assignment control unit 14 divides a plurality of subcarriers distributed in the carriers Sp1 and Sp2 into six logical subcarrier groups f11 to f16 and six logical subcarrier groups f21 to f26, respectively (see Fig. 4), using PUSC (partial usage of sub channels) as a frequency dividing and assigning method for each sector. The channel-assignment control unit 14 selects pairs of subcarrier groups from of the subcarrier groups f11 to f16 and assigns each pair of subcarrier groups to each of the three sectors S01, S02, and S03 in a specific cell (see Fig. 5). Similarly, the channel-assignment control unit 14 selects pairs of subcarrier groups from the subcarrier groups f21 to f26 and assigns each pair of subcarrier groups to each of the three sectors S04, S05, and S06 in a cell adjoining the cell to which the subcarrier groups f11 to f16 are assigned. In this way, the channel-assignment control unit 14 repeatedly assigns all subchannels on the two carriers Sp1 and Sp2 to six sectors in two adjoining cells.

The channel-assignment control unit 14 assigns two wireless frames F₁ and F₂ that are set in a wireless signal transmitted and received on the carriers Sₚ₁ and Sₚ₂, respectively, to a destination sector. The wireless frame F₁ includes subchannels assigned to the subcarrier groups f₁₁ to f₁₆, and the wireless frame F₂ includes subcarrier assigned to the subcarrier groups f₂₁ to f₂₆. At this time, the channel-assignment control unit 14 assigns the control data section D_{C} by time-division multiplexed to only one of the wireless frames F₁ and F₂ corresponding to the carrier Sₚ₁ or Sₚ₂ assigned to the destination sector.

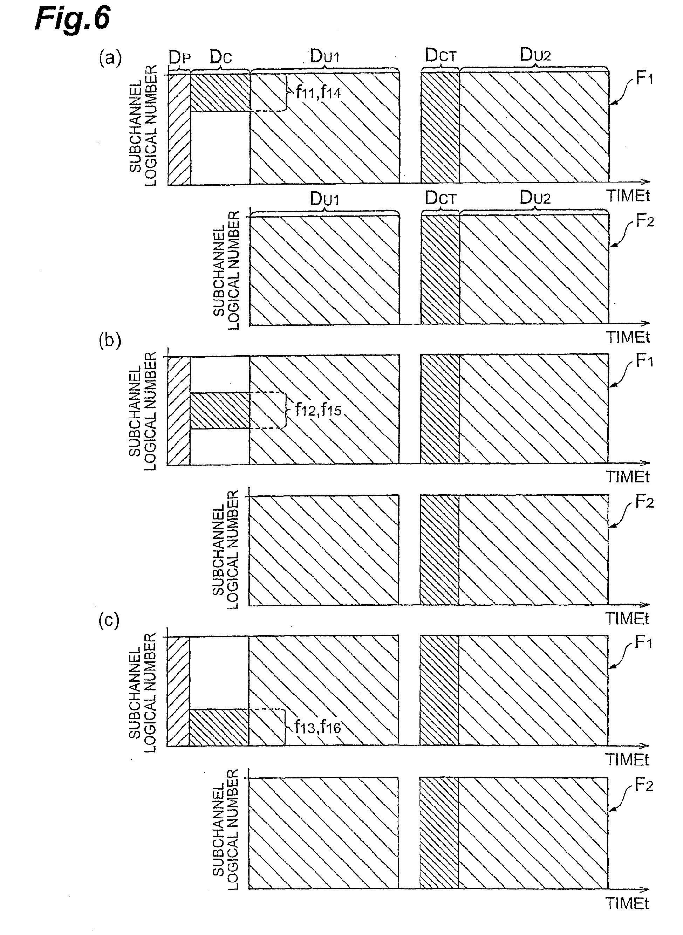

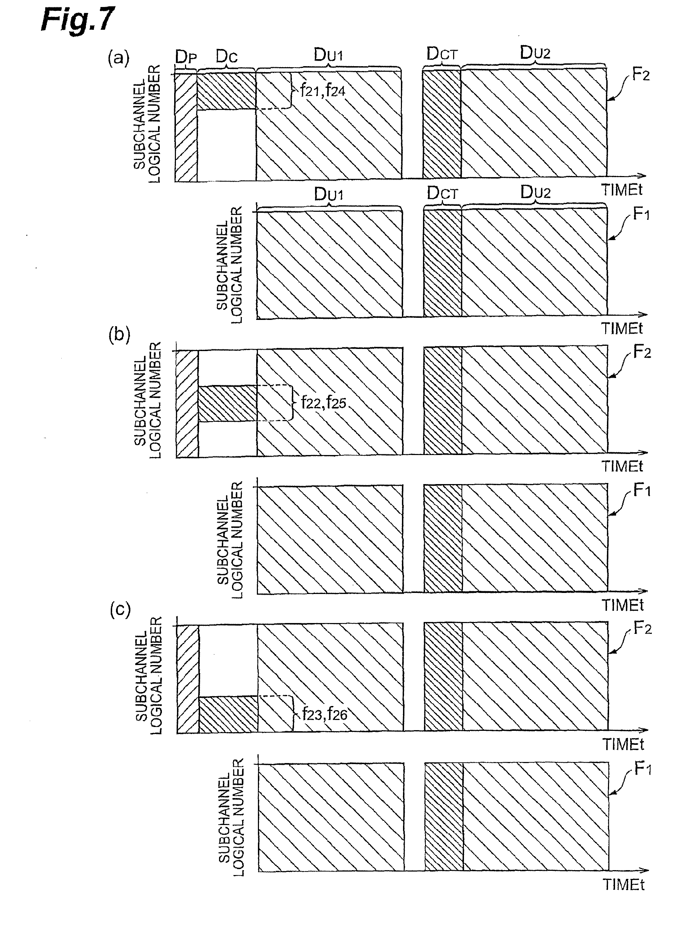

Figs. 6 and 7 are schematic views of a data series of the two wireless frames F₁ and F₂ assigned to each of the destination sectors S₀₁ to S₀₆ by the channel-assignment control unit 14. For example, when the channel-assignment control unit 14 creates the two wireless frames F₁ and F₂ corresponding to the destination sector S₀₁, the control data section D_{C} is assigned to area of the subcarrier groups f₁₁ and f₁₄ in the wireless frame F₁ on the carrier Sₚ₁ (Fig. 6A). At this time, to assign the control data section D_{C}, the channel-assignment control unit 14 estimates the size of the frame control header D_{C1} and the mapping information D_{C2}, including DL-MAP and UL-MAP, on the basis of information output from the multiplexing units 13, determines the capacity of the storage area, and determines position in time of the separation point of the control data section D_{C} and the user data section D_{U1}. Then, the channel-assignment control unit 14 enables retrieval of the control data section D_{C} at the mobile stations 30 by embedding information assigning the setting position of the frame control header D_{c1} in the preamble section Dp and embedding information specifying the subcarrier groups belonging to the area assigned to the destination sector (first storage information) in the frame control header D_{C1}.

After assigning the control data section D_{C}, the channel-assignment control unit 14 stores the downlink user data output from the multiplexing units 13 in the user data section D_{U1} assigned to areas on all subchannels S included in the two wireless frames F₁ and F₂ by time-division multiplex. The set position in time of the user data section D_{U1} of the wireless frame F₂ is set to be the same as that of the wireless frame F₁. The channel-assignment control unit 14 assigns the uplink section UL to a position subsequent in time to the user data section D_{U1} in each of the wireless frames F₁ and F₂. The uplink sections UL are assigned to all subchannels in the two wireless frames F₁ and F₂, and includes a control signal section D_{CT} for storing various control signals sent from the mobile stations 30 to the wireless base stations 10 and a user data section D_{U2} for storing uplink user data, which are time-divided.

Similarly, when the two wireless frames F₁ and F₂ corresponding to each of the destination sectors S₀₂ and S₀₃ are assigned, the channel-assignment control unit 14 assigns the control data sections D_{C} to only the corresponding areas of the subcarrier groups f₁₂ and f₁₅ and the subcarrier groups f₁₃ and f₁₆ in the wireless frame F₁ of the carrier S_{P1}, and, at the same time, assigns the user data sections D_{U1} and D_{U2} such that the user data can be stored in an area including all of the subchannels in the two wireless frames F₁ and F₂ (see Figs. 6B and 6C). When the two wireless frames F₁ and F₂ corresponding to each of the destination sectors S₀₄, S₀₅, and S₀₆ are created, the channel-assignment control unit 14 assigns control data sections D_{C} to the areas corresponding to subcarrier groups f₂₁ and f₂₄, subcarrier groups f₂₂ and f₂₅, and subcarrier groups f₂₃ and f₂₆ in the wireless frame F₂ on the carrier S_{P2}, and, at the same time, assigns the user data sections D_{U1} and D_{U2} such that the user data can be stored in an area including all of the subchannels in the two wireless frames F₁ and F₂ (see Figs. 7A to 7C).

The channel-assignment control unit 14 assigns, in advance, information indicating the storage start position of downlink user data to the mobile station 30 (second storage information) and storage type information indicating whether or not downlink user data for the mobile station 30 is stored in the wireless frames F₁ and F₂ to the DL-MAP included in the mapping information D_{C2} in the control data section D_{C} and enables the storage area of the user data to be specified by the mobile station 30 on the basis of the information.

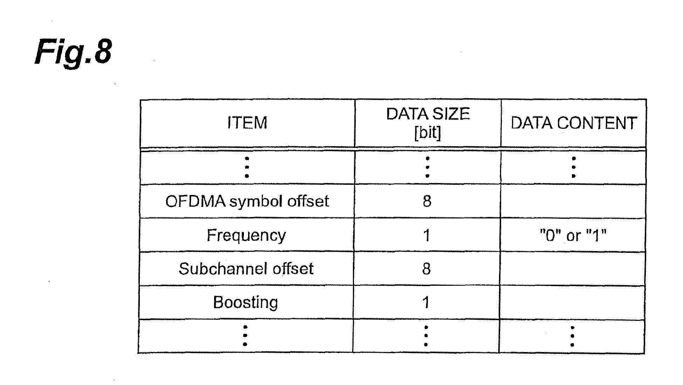

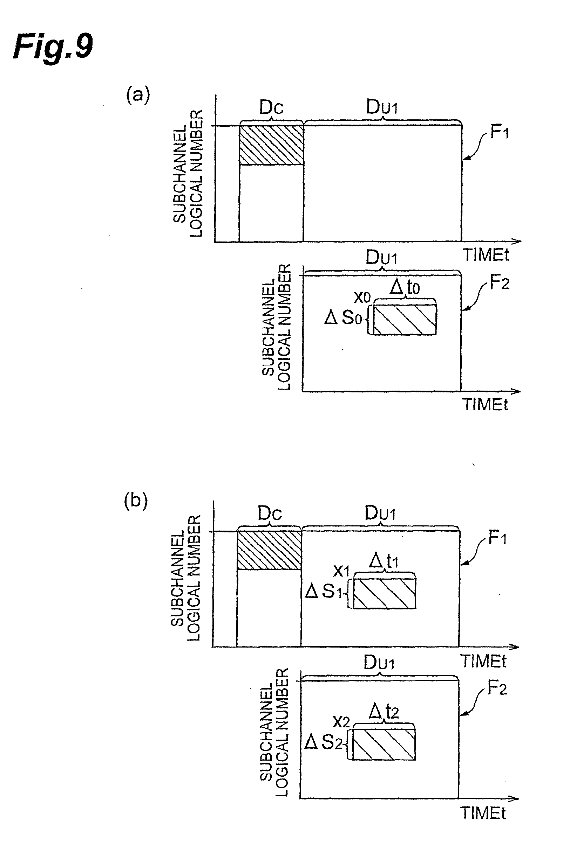

More specifically, the channel-assignment control unit 14 assigns data indicating a storage start position X of downlink user data and the storage data size (Δt and ΔS) in the frequency area and the time area in the DL-MAP, and, at the same time, assigns storage type information "Frequency" indicating whether or not user data in the wireless frames F₁ and F₂ to the DL-MAP. Fig. 8 illustrates an example data configuration of the DL-MAP set by the channel-assignment control unit 14. The storage type information "Frequency" shown in the drawing indicates whether or not downlink user data is stored in the wireless frames F₁ and F₂. For example, if the user data is stored only in the wireless frame F₂ (Fig. 9A), the storage type information "Frequency" is set to "1", whereas if user data is stored in both the wireless frames F₁ and F₂ (Fig. 9B), the storage type information, which is shown in Fig. 8, is assigned to each set of user data, and the storage type information "Frequency" is set to "0" and "1". By setting the DL-MAP in this way and notifying the mobile station 30, data can be safely retrieved at the mobile stations 30 even when downlink user data transmitted to the mobile stations 30 is transmitted by being stored only in the wireless frame F₂ (Fig 9A) or by being stored in both the wireless frames F₁ and F₂ (Fig 9B).

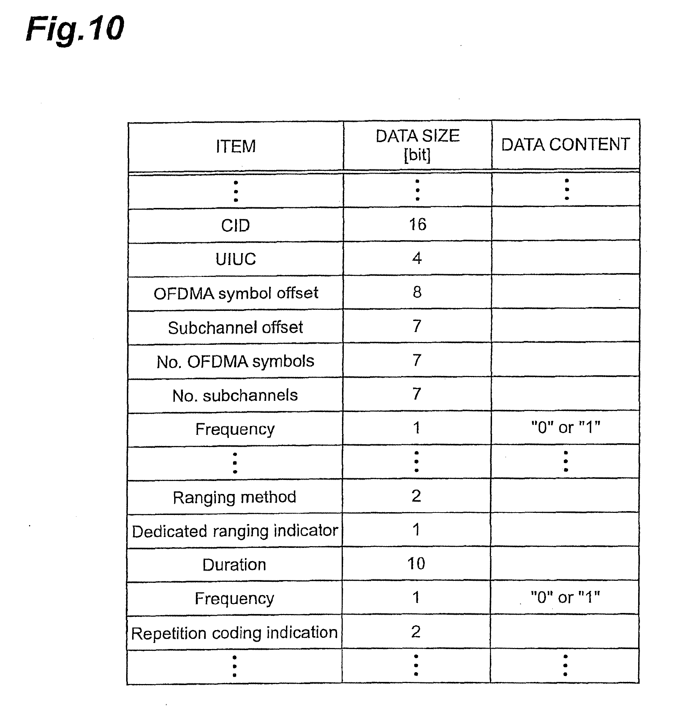

The channel-assignment control unit 14 also assigns, in advance information indicating the storage area of uplink user data and storage type information indicating whether or not uplink user data is stored in the wireless frames F₁ and F₂ to the UL-MAP included in the mapping information D_{c2} in the control data section D_{C} and allows the mobile stations 30 to specify the storage area of the uplink user data. Fig. 10 illustrates an example data configuration of a UL-MAP assigned by the channel-assignment control unit 14. The storage type information "Frequency", indicates whether or not user data is stored in the wireless frames F₁ and F₂.

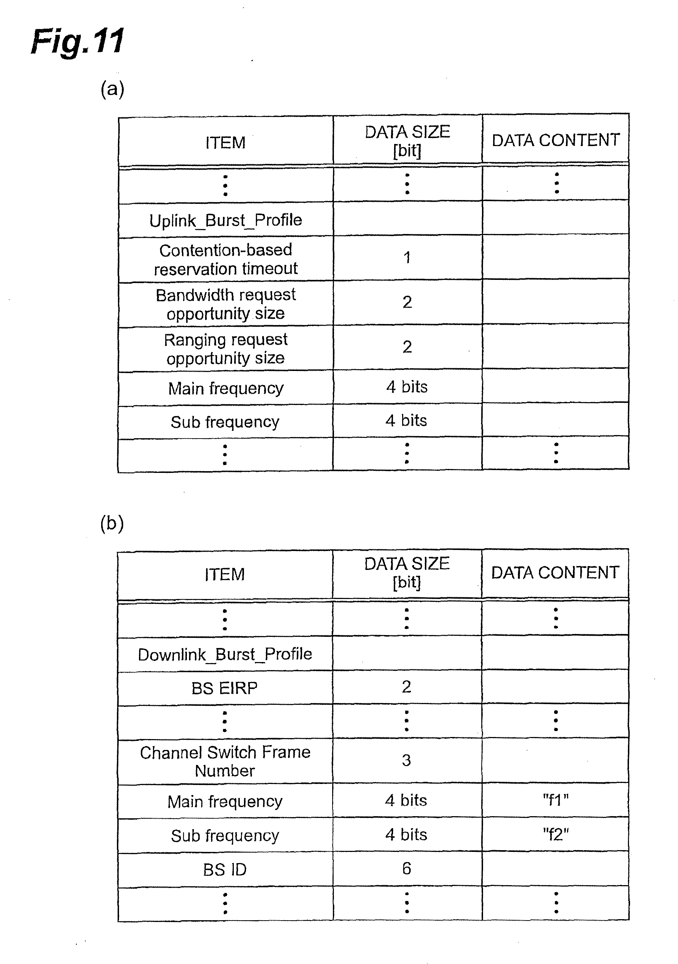

The channel-assignment control unit 14 writes the center frequency of the carriers Sₚ₁ and Sₚ₂ in control signals, i.e., a DL channel descriptor (DCD) and a UL channel descriptor (UCL), transmitted by the user data section D_{U1} so as to allow the mobile station 30 to specify the two carriers Sₚ₁ and Sₚ₂. Fig. 11A illustrates an example data configuration of the UCD set by the channel-assignment control unit 14. Fig. 11B illustrates an example data configuration of the DCD set by the channel-assignment control unit 14. As shown in these drawings, the UCD and the DCD includes a main frequency storage area "Main Frequency" for storing the center frequency of the carriers Sₚ₁ and Sₚ₂ and a subfrequency storage area "Subfrequency".

Referring back to Fig. 2, the mobile station 30 includes a transmitting and receiving unit (receiving means) 31, an OFDM-signal detecting unit 32, a channel-assignment analyzing unit (channel-assignment analyzing means) 33, a demodulating unit 34, an error-correction decoding unit 35, an error-correction coding unit 36, a modulating unit 37, and an OFDM-signal generating unit 38.

The transmitting and receiving unit 31 receives an OFDMA wireless signal including the two wireless frames from the wireless base station 10. The received wireless signal is detected by the OFDM-signal detecting unit 32 whereby the two wireless frames are retrieved from the wireless signal. After the control data section D_{C} is retrieved from the two wireless signals by the channel-assignment analyzing unit 33, the control data section D_{C} is analyzed in order to retrieve downlink user data from the wireless frames. Then, the user data is demodulated at the demodulating unit 34, and, then, error-correction decoding is performed at the error-correction decoding unit 35 in order to reconstruct information sent to the mobile station 30.

Error-correction coding is performed on the uplink user data to be transmitted to the wireless base station 10 at the error-correction coding unit 36. Data modulation is performed on the error-correction coded redundant bit information output from the error-correction coding unit 36 at the modulating unit 37. The uplink user data output from the modulating unit 37 is assigned to the two wireless frames by the channel-assignment analyzing unit 33. The wireless frames are converted to an OFDMA wireless signal by the OFDM-signal generating unit 38. The converted wireless signal is sent to an outside wireless base station 10 by the transmitting and receiving unit 31 using OFDMA.

The channel-assignment analyzing unit 33 analyzes the two wireless frames F₁ and F₂ output from the OFDM-signal detecting unit 32 by assigning subchannels as described below. In other words, the channel-assignment analyzing unit 33 assigns a subchannel to each subchannel logical number according to the same criterion as the wireless base station 10. More specifically, the channel-assignment analyzing unit 33 selects the subcarrier groups f₁₁ to f₁₆ and f₂₁ to f₂₆ from the plurality of subcarriers distributed in the carriers in the two frequency bands of the carrier signal from the wireless base station 10 (Fig. 4). Then, a subchannel identified by a subchannel logical number is assigned to each of the groups of subcarriers in order to analyze the two wireless frames F₁ and F₂.

Subsequently, the channel-assignment analyzing unit 33 reads the preamble section Dp from one of the two wireless frames F₁ and F₂ and retrieves the frame control header D_{C1} (Fig. 3B) of the control data section D_{C} on the basis of the information written in the preamble section D_{P}. Then, the channel-assignment analyzing unit 33 specifies an area including two groups of subcarriers in the wireless frame assigned to the sector in which itself is located on the basis of the first storage information included in the frame control header D_{C1} and separates the area from one of the wireless frames F₁ and F₂. For example, when the mobile station 30 is located in the sector S₁, an area including the subcarrier groups f₁₁ and f₁₄ is separated from the wireless frame F₁ (Fig. 6A). Then, the channel-assignment analyzing unit 33 retrieves the mapping information D_{C2}, including the DL-MAP and UL-MAP, from the separated area. Subsequently, the channel-assignment analyzing unit 33 reads information indicating the storage start position X and the storage data size (Δt, ΔS) of the user data and the storage type information "Frequency" indicating whether user data is stored in the two wireless frames F₁ and F₂ from the DL-MAP and UL-MAP. The channel-assignment analyzing unit 33 specifies the storage area of the downlink user data and the uplink user data in the two wireless frames F₁ and F₂ on the basis of the information and determines the wireless frames F₁ and F₂ to which the user data is assigned.

The channel-assignment analyzing unit 33 analyzes the control data section D_{C}, retrieves the downlink user data to the mobile station 30 from the user data section D_{U1} assigned to the area including all subchannels in the two wireless frames F₁ and F₂ and outputs the retrieved user data to the demodulating unit 34. At this time, the channel-assignment analyzing unit 33 can specify the area to which the user data to be sent to the mobile station 30 is assigned in the user data section D_{U1} on the basis of the DL-MAP included in the mapping information D_{C2}. At the same time, the channel-assignment analyzing unit 33 analyzes the control data section D_{C} to determine the storage area of the uplink user data for the mobile station 30 in the user data section D_{U2} in the two wireless frames F₁ and F₂ by analyzing the control data section D_{C}. Then, the channel-assignment analyzing unit 33 sets the wireless frames F₁ and F₂ by storing the uplink user data output from the modulating unit 37 in the determined storage area and outputs the frames to the OFDM-signal generating unit 38.

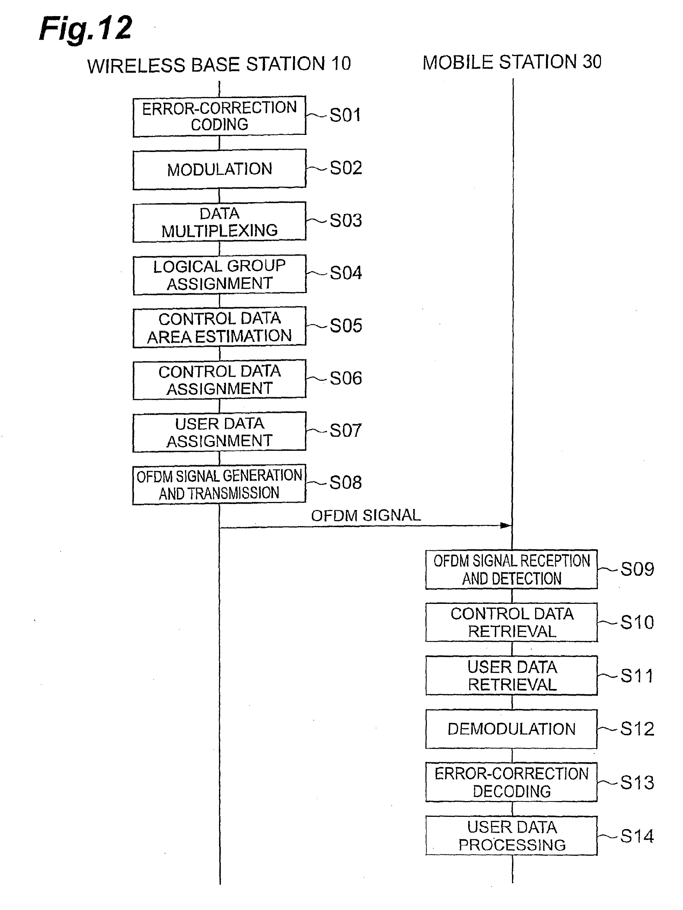

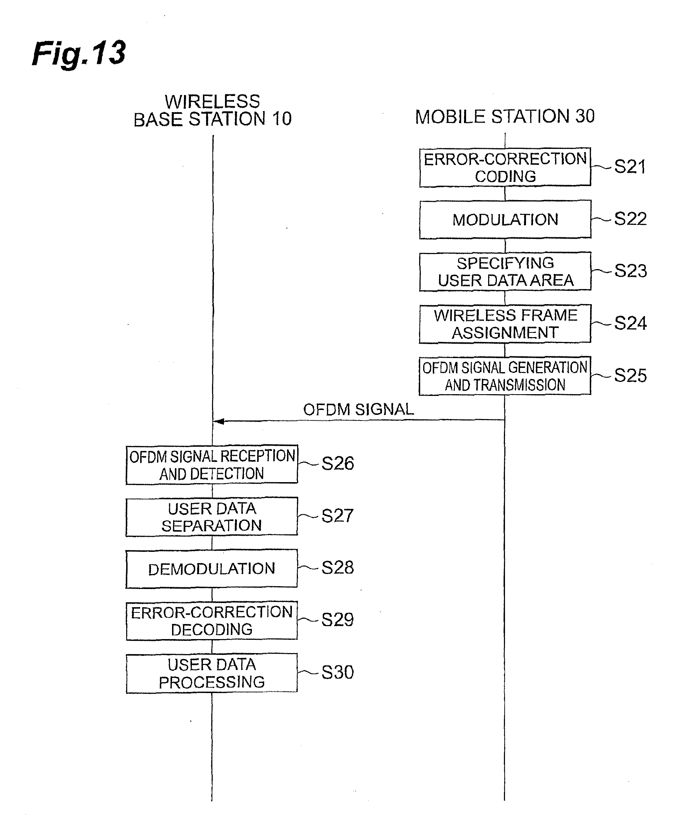

Next, the operation of the wireless communication system including the wireless base stations 10 and the mobile stations 30 will be described with reference to Fig. 12 and 13, and, in addition, a wireless communication method of the wireless communication system will be described. Fig. 12 is a sequence diagram of the operation of the wireless communication system when transmitting downlink user data from a wireless base station 10 to a mobile station 30. Fig. 13 is a sequence diagram of the operation when uplink user data is transmitted from a mobile station 30 to a wireless base station 10.

As shown in Fig. 12, when information to be transmitted from the wireless communication network to the mobile station 30 is received at the wireless base station 10, error-correction coding is performed on the information at the error-correction coding units 11₁ to 11_{N} of the wireless base station 10 (Step S01). Then, redundant bit information generated by the error-correction coding is modulated at the modulating units 12₁ to 12_{N} (Step S02) and is multiplexed at the multiplexing units 13 in order to generate time-division multiplexed downlink user data (Step S03).

Next, the channel-assignment control unit 14 selects two groups of subcarriers corresponding to the destination sector from two carriers (Step S04). Then, the channel-assignment control unit 14 estimates the size of the control data section D_{C} on the basis of the information output from the multiplexing units 13 (Step S05). The channel-assignment control unit 14 stores the frame control header D_{C1} and the mapping information D_{C2} in the control data section D_{C} assigned to one of the two wireless frames F₁ and F₂ (Step S06). After assigning the control data section D_{C}, the channel-assignment control unit 14 stores the downlink user data in all subchannels of the two wireless frames F₁ and F₂ (Step S07). In this way, an OFDMA wireless signal is generated at the OFDM-signal generating unit 15, and the generated wireless signal is transmitted to the mobile station 30 by the transmitting and receiving unit 16 (Step S08).

When the transmitting and receiving unit 31 of the mobile station 30 receives the wireless signal and the OFDM-signal detecting unit 32 detects the wireless signal, two wireless frames F₁ and F₂ are retrieved from the wireless signal (Step S09). The channel-assignment analyzing unit 33 extracts, in order, the preamble section D_{P}, the frame control header D_{C1}, and the mapping information D_{C2} in the control data section D_{C}, from one of the wireless frames F₁ and F₂ (Step S10). Subsequently, the channel-assignment analyzing unit 33 interprets the DL-MAP of the mapping information D_{C2} in order to retrieve the downlink user data from the user data section D_{U1} expanded in all of the subchannels in the wireless frames F₁ and F₂ (Step S11).

The user data retrieved in this way is demodulated to redundant bit information from the time-division multiplexed data at the demodulating unit 34 (Step S12). Then, the error-correction decoding unit 35 performs error-correction decoding on the redundant bit information so as to reconstruct the original information (Step S13). Finally, a predetermined processing is performed on the information according to application programs in the mobile station 30 (Step S 14).

Referring to Fig. 13, when information to be transmitted to the wireless base station 10 is generated at the mobile station 30, the error-correction coding unit 36 of the mobile station 30 performs error-correction coding to the information (Step S21). The modulating unit 37 modulates the redundant bit information generated by error-correction coding so as to generate uplink user data (Step S22).

Next, the channel-assignment analyzing unit 33 specifies the storage areas in the wireless frames F₁ and F₂ of the uplink user data on the basis of the mapping information D_{C2} stored in the control data sections D_{C} of the two wireless frames F₁ and F₂ send from the wireless base station 10 (Step S23). Then, the channel-assignment analyzing unit 33 stores the uplink user data in the areas in the user data sections D_{U2} assigned to all of the subchannels of the two wireless frames F₁ and F₂ (Step S24). Subsequently, an OFDMA wireless signal is generated at the OFDM-signal generating unit 38 and transmitted to the wireless base station 10 by the transmitting and receiving unit 31 (Step S25).

When the transmitting and receiving unit 16 of the wireless base station 10 receives the wireless signal and the OFDM-signal detecting unit 17 detects the wireless signal, the two wireless frames F₁ and F₂ are retrieved from the wireless signal (Step S26). The channel-assignment control unit 14 separates the uplink user data from the mobile station 30 from the user data sections D_{U1} expanded in all of the subchannels in the wireless frames F₁ and F₂ (Step S27).

The user data retrieved in this way is demodulated as redundant bit information from the time-division multiplexed data by the demodulating units 19₁ to 19_{N} (Step S28). Then, the error-correction decoding units 20₁ to 20_{N} perform error-correction decoding on the redundant bit information to reconstruct the original information (Step S29). Various processing, such as data transfer, is performed on the reconstructed information in the wireless communication system including the wireless base station 10 (Step S30).

According to the above-described wireless base station 10 and mobile station 30, a plurality of groups of subcarriers are selected on two carriers, and two wireless frames F₁ and F₂ including a plurality of subchannels generated from the groups of subcarriers are constructed. User data and control data, on the assignment of the user data to the two wireless frames F₁ and F₂, are assigned to the two wireless frames F₁ and F₂, and a wireless signal including the wireless frames F₁ and F₂ is transmitted to the mobile station 30. At this time, the subchannels in the two wireless frames F₁ and F₂ are divided into areas for each destination sector. The control data is stored in the areas corresponding to the destination sectors, and the user data can be stored on all subchannels across the two wireless frames F₁ and F₂. Since the mobile station 30 receives the wireless signal from the wireless base station 10, the control data is separated from the areas of the subchannels divided in the received two wireless frames F₁ and F₂, and the user data can be separated from all of the subchannels in the two wireless frames F₁ and F₂, deficiency of control data caused by interference between cells can be prevented at the mobile station 30 and a reception quality of the user data can be secured. At the same time, throughput of the user data during transmission can be efficiently improved by receiving the user data by effectively using the bandwidth of the two wireless frames F₁ and F₂.

Since the storage destination of the control data in the divided areas in the two wireless frames F₁ and F₂ is notified by the wireless base station 10 to the mobile station 30, and the storage start position of the user data and the storage destination in the wireless frames F₁ and F₂ are notified using the control data, the control data and the user data can be reliably retrieved at the mobile station 30 from the subchannels in the two wireless frames F₁ and F₂.

Since the wireless base station 10 separates the uplink user data from the two wireless frames F₁ and F₂, throughput of the user data during transmission can be efficiently improved by transmitting the user data by effectively utilizing the bandwidth of the two wireless frames F₁ and F₂ while receiving the user data from the mobile station 30.

The channel-assignment control unit 14 of the wireless base station 10 assigns a control signal section D_{CT} for storing various control signal transmitted from the mobile station 30 to the wireless base station 10 to all of the subchannel in the two wireless frames F₁ and F₂. In this way, control signals transmitted from the mobile station 30 during initial ranging of the network connection, communication quality information for adaptive modulation transmitted from the mobile station 30, and control information for controlling error correction transmitted from the mobile station 30 can be distributed in two frequency bands. In this way, the delay time of the various control processing can be efficiently reduced.

The present invention is not limited to the above-described embodiment. Instead of using carriers, which are in two different frequency bands and are assigned to the transmitted and received wireless signal, for example, subchannels of three or more carriers may be assigned to three or more wireless frames. In such a case, instead of storage type information indicating whether or not user data is stored, information indicating the storage destination of the user data assigned to the mapping information D_{C2} by the channel-assignment control unit 14 may be set as carrier identification information for identifying the transmitted carriers corresponding to the wireless frames of the storage destination.

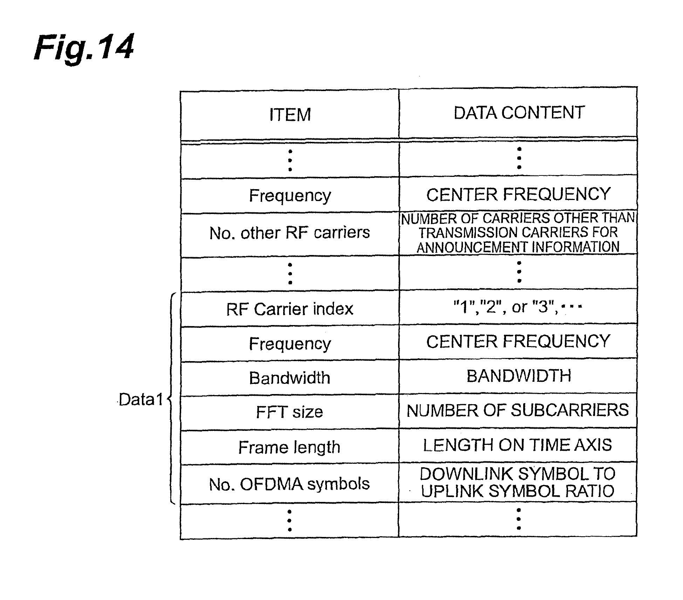

More specifically, similar to use of two wireless frames F₁ and F₂, the channel-assignment control unit 14 notifies the mobile station 30 about the attribute information associated with a wireless frame by transmitting the control signals DCD and UDC to the mobile station 30 in advance. Fig. 14 illustrates the data configuration of the control signals DCD and UDC transmitted by the channel-assignment control unit 14. The center frequency "Frequency" of the transmitted carrier on which the control signals DCD and UDC are transmitted, the number of carriers other than the transmitted carrier "No. Other RF Carriers", and attribute information "Data1" of the wireless frames corresponding to the carriers other than the transmitted carrier of the control signals DCD and UDC are assigned to the control signals DCD and UDC. The attribute information "Data1" is repeated the same number of times as the number of carriers and includes carrier identification information "RF Carrier Index" including identification numbers, such as "1", "2", and "3", the center frequency "Frequency", the bandwidth of the carrier "Bandwidth", the number of subcarriers assigned to the wireless frame "FFT size", the size on the time axis of the wireless frame "Frame length", and the ratio of symbols in the downlink section DL and the uplink section UL of the wireless frame "No. OFDMA Symbols".

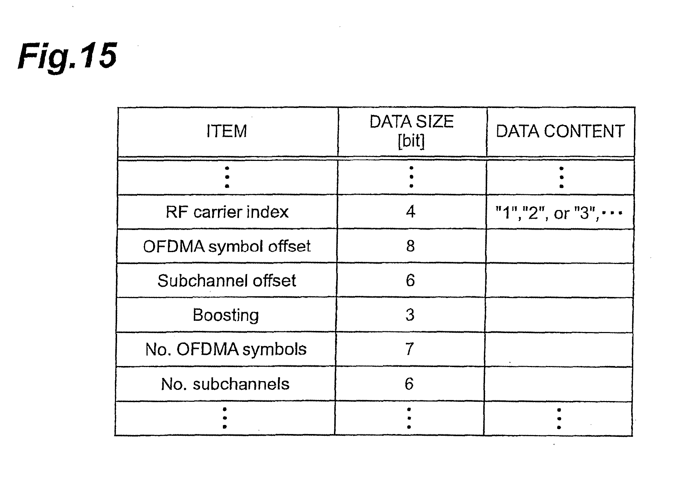

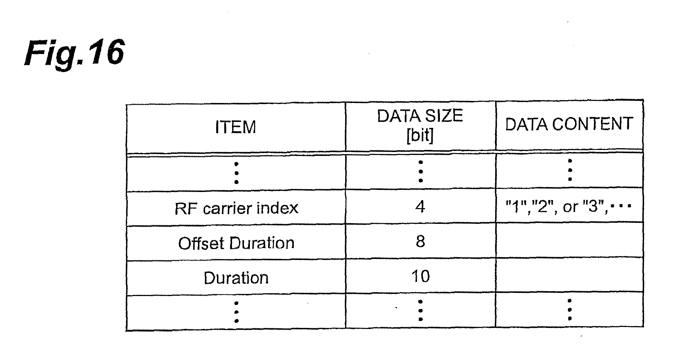

Then, the channel-assignment control unit 14 embeds the carrier identification information "RF Carrier Index" for identifying the transmitted carrier corresponding to the wireless frame which is the storage destination of the user data into the DL-MAP and UL-MAP included in the mapping information D_{C2}. Fig. 15 illustrates the data configuration of the DL-MAP. The carrier assigned to the wireless frame where the downlink user data is stored is specified by the data item "RF Carrier Index". The storage start position (x₀ in Fig. 9A) of the downlink user data is specified by the data items "OFDMA Symbol Offset" and "Subchannel Offset". The size at the time axis (Δt₀ in Fig. 9A) of a setting area in the downlink user data is specified by the data item "No. OFDMA symbols". The number of subchannels (ΔS₀ in Fig. 9A) assigned to a setting area in the downlink user data is specified by the data item "No. Subchannels". Fig. 16 illustrates the data configuration of the UL-MAP. The carrier assigned to the wireless frame where the uplink user data is stored is specified by the data item "RF Carrier Index". The storage start position of the uplink user data is specified by the data item "Offset Duration". The size of a setting area of the uplink user data is specified by the data item "Duration".

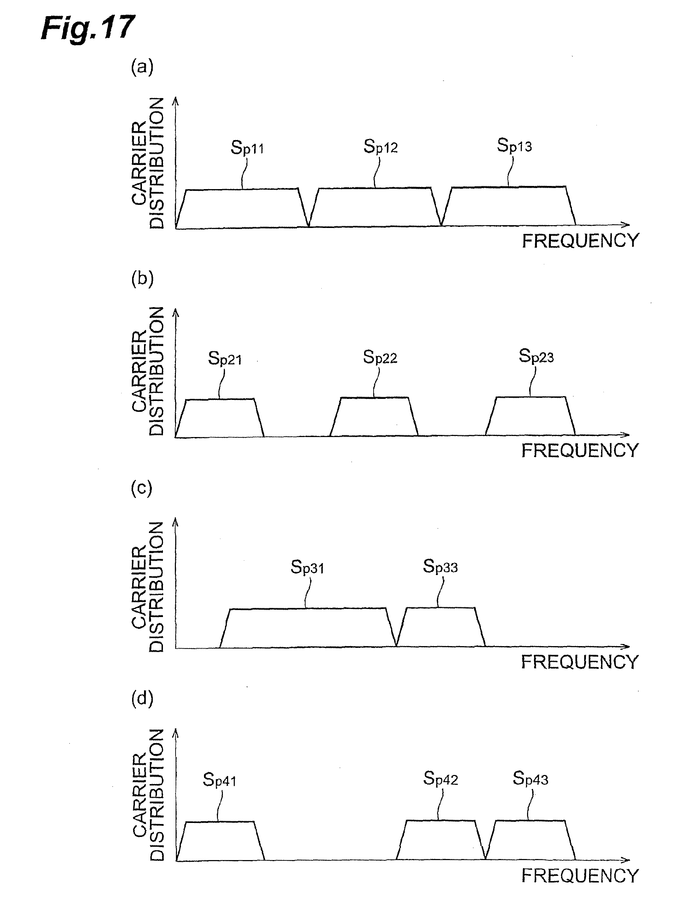

By assigning the carrier identification information to the DL-MAP and the UL-MAP, control data and user data can be reliably transmitted and received between the mobile station 30 and the wireless base station 10 even when three or more frequency bands Sₚ₁₁, Sₚ₁₂, and Sₚ₁₃ are assigned to different wireless frames (Fig. 17A). Furthermore, control data and user data can be reliably transmitted and received even when frequency bands Sₚ₁₁, Sₚ₁₂, and Sₚ₁₃ assigned to the wireless frame are discretely distributed (Fig. 17B), when the bandwidths of frequency bands Sₚ₃₁ and Sₚ₃₃ differ (Fig. 17C), or when the different frequency bands, i.e., frequency band Sₚ₄₁ and frequency bands Sₚ₄₂ and Sₚ₄₃, are assigned to the uplink and downlink directions, respectively (Fig. 17D).

The channel-assignment control unit 14 may be configured such that user data can be stored in a time domain corresponding to the control data section D_{C} of a wireless frame to which control information is not assigned when assigning the user data to the two wireless frames F₁ and F₂.

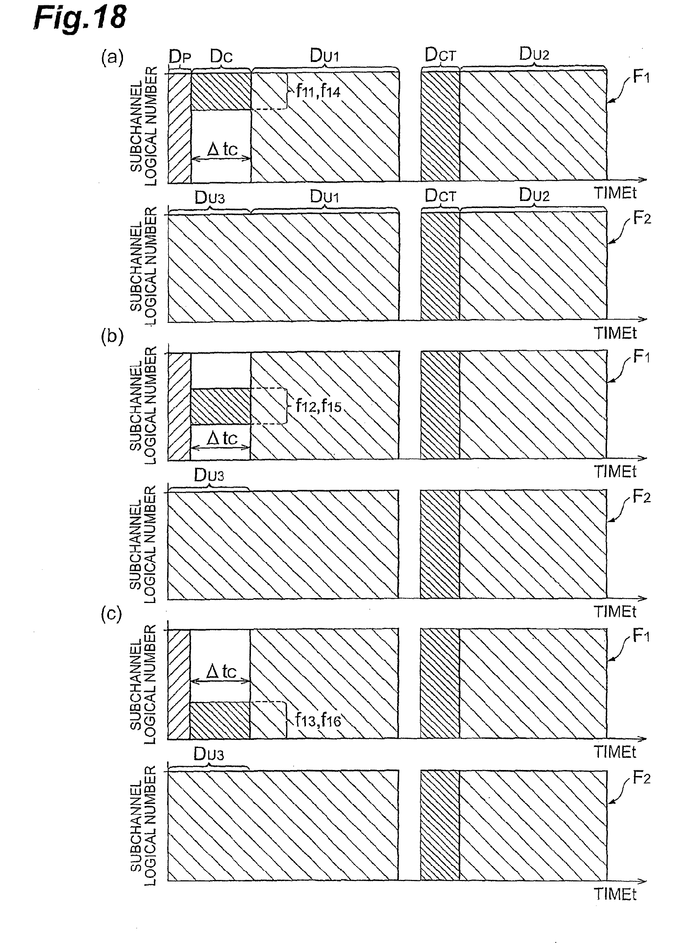

In other words, the channel-assignment control unit 14 assigns wireless frames F₁ and F₂, having configurations such as those illustrated in Figs. 18A to 18C, to the destination sectors S₀₁ to S₀₃, respectively. More specifically, the control data section D_{C} is assigned to the time area Δt_{C} of the subcarrier groups f₁₁ and f₁₄ corresponding to the destination sector in the wireless frame F₁. Downlink user data is assigned to an area D_{U3} corresponding to the time area Δt_{C} of the wireless frame F₂, not including subcarrier groups f₁₁ and f₁₄ corresponding to the destination sector S₀₁. Similarly, downlink user data is assigned to the area D_{U3} corresponding to the time area Δt_{C} of the wireless frame F₂, not including the subcarrier groups f₁₂ and f₁₅ corresponding to the destination sector S₀₂, and downlink user data is assigned to the area D_{U3} corresponding to the time area Δt_{C} of the wireless frame F₂, not including the subcarrier groups f₁₃ and f₁₆ corresponding to the destination sector S₀₃. In this way, wireless resources can be efficiently used by transmitting user data using the vacant area in the wireless frame F₂. When assigning the user data to the area D_{U3} in the wireless frame F₂, the channel-assignment control unit 14 transmits the change in the data assignment to the mobile station 30 using the control information, such as DL-MAP, in a wireless frame sent to the mobile station 30 immediately before. As a result, the unnecessary area D_{U3} does not have to be buffered at the mobile station 30, and the user data can be efficiently retrieved.

According to the following criterion, the channel-assignment control unit 14 determines whether or not to assign the downlink user data to be sent to the mobile station 30 to the area D_{U3} on the basis the communication quality information in the downlink direction acquired in advance by each mobile station 30 and the type of the communication service provided to the mobile stations 30. More specifically, when the carrier to interference and noise ratio (CINR) measured by each mobile station 30 is greater than a predetermined value and when a predetermined communication quality is achieved, downlink user data to be sent to the corresponding mobile station 30 is assigned to the area D_{U3}. In addition to this criterion or instead of this criterion, downlink user data to be sent to the corresponding mobile station 30 may be assigned to the area D_{U3} when the communication service provided to the mobile station 30 is determined to be a communication service having a low-speed fixed rate, such as audio communication. In this way, wireless resources can be efficiently used while maintaining the reception quality of the user data by transmitting the user data to a destination that less likely to experience inter-carrier interference using a vacant area in the wireless frame.

When the channel-assignment control unit 14 assigns the downlink user data to the area D_{U3}, the transmission power of the downlink user data in the area D_{U3} may be set lower than the transmission power of the user data sections D_{U1} and D_{U2} assigned to other time domain within a range that satisfies a predetermined CINR. In this way, interference occurring between carriers when the control data section D_{C} is received can be reduced, and the control data can be reliably retrieved from the wireless frame at the mobile station 30.

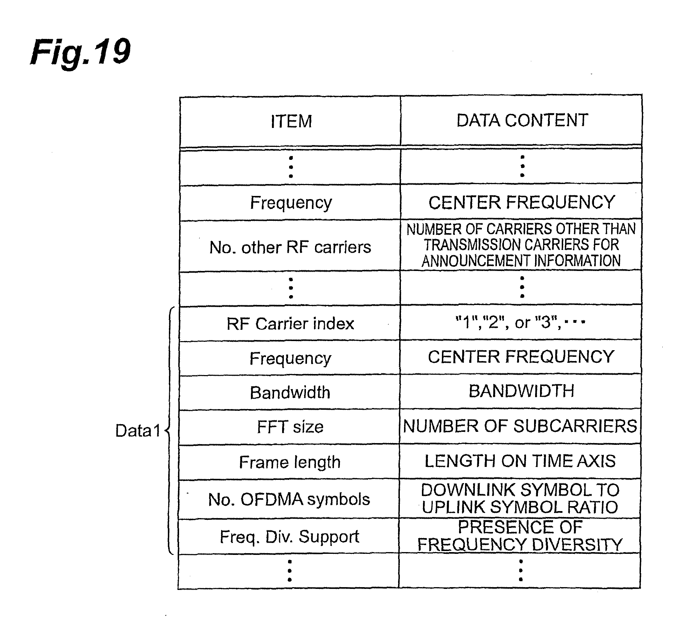

When the channel-assignment control unit 14 assigns the control data sections D_{C} to the wireless frames F₁ and F₂, control signals may be transmitted using frequency diversity by assigning the control data sections D_{C} including the same data to the wireless frames F₁ and F₂. In such a case, the channel-assignment control unit 14 notifies the mobile station 30 in advance with the control signals DCD and UCD whether or not frequency diversity is to be used. Fig. 19 illustrates the data configuration of the control signals DCD and UCD transmitted by the channel-assignment control unit 14. Flag information "Freq. Div. Support" for indicating whether or not frequency diversity is used in a wireless frame is assigned to the control signals DCD and UCD in association with carrier identification information "RF Carrier Index" for identifying the carrier assigned to a wireless frame.

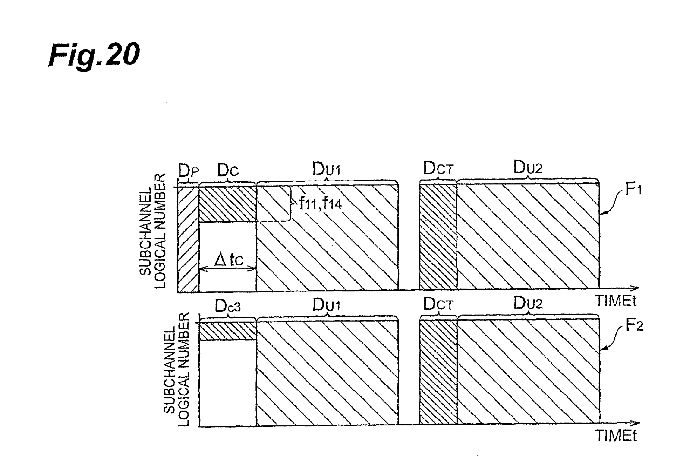

The channel-assignment control unit 14 may be configured to distribute control data in a wireless frame that does not include an area for the control data section D_{C} assigned to each destination sector. In other words, when the control data size assigned to the control data section D_{C} corresponding to the destination sector S₀₁ increases because of an increase in the amount of traffic of the downlink user data, the channel-assignment control unit 14 additionally assigns control data, such as DL-MAP, also to the same time domain D_{C3}, which is in the wireless frame F₂ not including the control data section D_{C} (Fig. 20). In this way, since the control data can be distributed throughout the frequency band, the user data can be efficiently transmitted even when traffic of the user data increases.

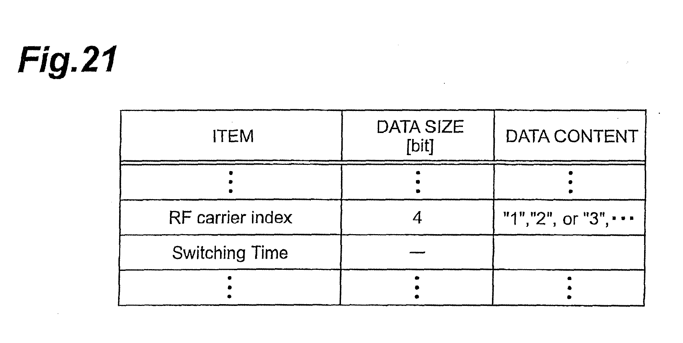

At this time, the timing of switching the carrier for transmitting the control data is notified by the wireless base station 10 to the mobile station 30 in advance using control information in the downlink direction. More specifically, the timing of switching the carrier is notified by control information DL-MAP included in the control data section D_{C} transmitted immediately before from the wireless base station 10 to the mobile station 30 and control information Sub-DL-MAP in the downlink direction assigned to the user data section D_{U1}. Fig. 21 illustrates information items assigned to the DL-MAP in such a case. The carrier identification information "RF Carrier Index" for identifying the carrier after switching and data "Switching Time" for specifying the switching timing based on the transmission time of the DL-MAP are linked and assigned. By receiving the DL-MAP having such a configuration, the mobile station 30 can reliably retrieve control information addressed to itself from the wireless frame.

## Claims

1. A wireless base station (10) that transmits and receives wireless signals by orthogonal frequency division multiple access between a plurality of mobile stations, comprising:
multiplexing means (13) generating multiplexed user data;
channel-assignment controlling means (14) generating a plurality of subchannels, each including a bundle of subcarriers distributed on a first carrier, generating a plurality of subchannels, each including a bundle of subcarriers distributed on a second carrier different from the first carrier, forming a first wireless frame including the subchannels generated on the first carrier, forming a second wireless frame including the subchannels generated on the second carrier, and multiplexing and assigning the user data and control data, on the assignment of the user data in the first and second wireless frames, in the first and second wireless frames; and
transmitting means (16) transmitting a wireless signal including the first and second wireless frames,
wherein the channel-assignment controlling means (14) assigns all of the subchannels in the first and second wireless frames to areas of destination sectors of the wireless signal, stores the control data in only the area corresponding to the destination sector of the user data, and stores the user data in all of the areas in the first and second wireless frames.

2. The wireless base station according to Claim 1, wherein the channel-assignment controlling means (14) sets first storage information for specifying the area of the storage destination of the control data to the first or second wireless frame and sets second storage information for indicating a storage start position of the user data in the first or second wireless frame and storage type information for indicating whether or not the user data is stored in the first and second wireless frames to the control data.

3. The wireless base station according to Claim 1, wherein the channel-assignment controlling means (14) sets first storage information for specifying the area of the storage destination of the control data to the first or second wireless frame and sets second storage information for indicating a storage start position of the user data in the first or second wireless frame and carrier identification information for identifying a carrier corresponding to the wireless frame of the storage destination of the user data to the control data.

4. The wireless base station according to one of Claims 1 to 3, wherein the channel-assignment controlling means (14) stores the control data in a specific time domain in the area corresponding to the destination sector and stores the user data the specific time domain in one of the first and second wireless frames, whichever does not include the area corresponding to the destination sector.

5. The wireless base station according to Claim 4, wherein the channel-assignment controlling means (14) specifies the user data addressed to one of the mobile stations which satisfies a predetermined communication quality on the basis of communication quality information in a downlink direction of the mobile stations and stores the specified user data in the specified time domain in the wireless frame that does not include an area corresponding to the destination sector.

6. The wireless base station according to Claim 4 or 5, wherein, when the user data is stored in the specific time domain in the wireless frame that does not include an area corresponding to the destination sector, transmission power of the user data is set lower than transmission power of user data stored in a time domain other than the specific time domain within a range satisfying a predetermined communication quality.

7. The wireless base station according to one of Claims 1 to 6, wherein the channel-assignment controlling means (14) further distributes and stores the control data in one of the first and second wireless frames, whichever does not include an area corresponding to the destination sector.

8. The wireless base station according to one of Claims 1 to 7, further comprising:
receiving means (16) receiving a wireless signal including the first and second frames; and
channel-assignment analyzing means (33) separating user data from the wireless signal,
wherein the channel-assignment analyzing means (33) separates the user data from all of the areas in the first and second frames.

9. A mobile station (30) that transmits and receives a wireless signal by orthogonal frequency division multiple access between a plurality of mobile stations, comprising:
receiving means (16) receiving a wireless signal from the wireless base station, the wireless signal including a first wireless frame comprising subchannels, each including a bundle of subcarriers distributed on a first carrier and a second wireless frame comprising subchannels, each including a bundle of subcarriers distributed on a second carrier; and
channel-assignment analyzing means (33) separating control data, on the assignment of user data in a first wireless frame and a second wireless frame, and the user data being multiplexed from the first and second wireless frames,
wherein the channel-assignment analyzing means divides all of the groups of subchannels in the first and second wireless frames into areas for destination sectors of the wireless base station, separates the control data from only the area corresponding to the mobile station in the first or the second wireless frame, and separates the user data from all of the areas in the first and the second wireless frames.

10. A wireless communication system comprising:
a wireless base station according to Claim 1; and
a mobile station (30) according to Claim 9.

11. A wireless communication method of transmitting and receiving a wireless signal by orthogonal frequency division multiple access between a wireless base station and a mobile station, the method comprising:
a multiplexing step (13) of generating multiplexed user data at the wireless base station;
a channel-assignment controlling step (14), at the wireless base station, of generating a plurality of subchannels, each including a bundle of subcarriers distributed on a first carrier, generating a plurality of subchannels, each including a bundle of subcarriers distributed on a second carrier different from the first carrier, forming a first wireless frame including the subchannels generated on the first carrier, forming a second wireless frame including the subchannels generated on the second carrier, and multiplexing and assigning the user data and control data, on the assignment of the user data in the first and second wireless frames, in the first and second wireless frames; and
transmitting step (16) of transmitting a wireless signal including the first and second frames from the wireless base station;
a receiving step (16) of receiving the wireless signal from the wireless base station at the mobile station; and
a channel-assignment analyzing step (33), at the mobile station, of retrieving control data, on the assignment of user data in a first and a second wireless frames, and the user data being multiplexed from the first and second wireless frames,
wherein, in the channel-assignment controlling step (19), all of the subchannels in the first and second wireless frames are assigned to areas of destination sectors of the wireless signal, the control data is stored in only the area corresponding to the destination sector of the user data, and the user data is stored in all of the areas in the first and second wireless frames, and
wherein, in the channel-assignment analyzing step (33), the control data is separated from only the area corresponding to the mobile station in the first and second wireless frames and separates the user data from all of the areas in the first and second wireless frames.
